# EUROPÄISCHE PATENTSCHRIFT

(11) **EP 2 113 613 B1**
(45) Veröffentlichungstag und Bekanntmachung des Hinweises auf die Patenterteilung: **02.06.2021**
(21) Anmeldenummer: 09158359.1
(22) Anmeldetag: 21.04.2009
(51) Int. Cl.: E01C 23/088, E02F 7/02, B65G 21/14

(54) **Knickbares Transportband für eine Baumaschine, selbstfahrende Baumaschine und Verfahren zum Verschwenken eines Transportbandes**
Foldable transport belt for a construction machine, self-propelled construction machine and method for moving a transport belt
Bande de transport pliable pour un engin, engin automobile et procédé de basculement d'une bande de transport

(30) Priorität: 29.04.2008 DE 102008021484
(43) Veröffentlichungstag der Anmeldung: 04.11.2009
(73) Patentinhaber: Wirtgen GmbH, 53578 Windhagen (DE)
(72) Erfinder: Berning, Christian, 53909 Zülpich (DE); Kötting, Heinz, 53577 Neustad/Wied (DE); Schneider, Björn, 53547 Leubsdorf (DE); Ley, Herbert, 53562 St. Katharinen (DE); Berges, Jörg, 53773 Hennef (DE); Lenz, Martin, 56276 Großmaischeid (DE)
(74) Vertreter: dompatent von Kreisler Selting Werner - Partnerschaft von Patent- und Rechtsanwälten mbB

(56) Entgegenhaltungen:
- EP-A- 1 864 921
- DD-B- 203 885
- DE-A1- 2 228 395
- DE-A1- 3 528 038
- US-A- 3 362 460

## Beschreibung

Die Erfindung betrifft eine selbstfahrende Baumaschine nach dem Anspruch 1, sowie ein Verfahren zum Verschwenken eines Transportabschnittes nach Anspruch 14.

Baumaschinen, die mit einem Transportband versehen sind und bei denen das Transportband an der Baumaschine angelenkt ist, können im Falle eines Transportes einen hohen Platzbedarf haben.

Um das Transportband nicht vollständig von der Baumaschine abmontieren zu müssen, ist es bereits bekannt, ein knickbares Transportband vorzusehen, das einen ersten an der Baumaschine angelenkten Transportbandabschnitt und einen sich an diesen anschließenden zweiten verschwenkbaren Transportbandabschnitt aufweist. Kleinere Transportbänder werden manuell verschwenkt. Bei größeren Transportbändern wird mit Hilfe eines Schwenkgetriebes, das zwischen den Transportabschnitten wirkt, ein Verschwenken des Transportbandes von einer Arbeitsstellung in eine Transportstellung ermöglicht. Ein Förderband läuft endlos um beide Transportbandabschnitte um.

Nach dem Stand der Technik ist ein Schwenkgetriebe vorgesehen, das aus einem schwenkbaren Hebel besteht, an dem zwei Kolben-Zylindereinheiten an unterschiedlichen Stellen des Hebels angreifen. Jeweils eine Kolben-Zylindereinheit ist an einem der Transportbandabschnitte angelenkt.

Bei dem Stand der Technik besteht der Nachteil eines hohen apparativen Aufwandes, da der schwenkbare Transportbandabschnitt in seinen Endpositionen durch das Schwenkgetriebe nicht gesichert ist und daher in den Endpositionen Arretiervorrichtungen benötigt.

Außerdem besteht ein Nachteil darin, dass hydraulische Versorgungsleitungen bis zu dem schwenkbaren Transportbandabschnitt vorgesehen werden müssen, die beim Verschwenken des knickbaren Transportbandes in die Transportstellung leicht beschädigt werden können.

Bei einem alternativen Stand der Technik ist das Schwenkgetriebe dadurch gekennzeichnet, dass eine Kolben-Zylindereinheit an dem gemeinsamen Gelenkpunkt zweier Lenker angreift, wobei das jeweils von dem gemeinsamen Gelenkpunkt abgewandte Ende der Lenker wiederum gelenkig mit einem der Transportbandabschnitte verbunden ist.

Der Nachteil bei diesem Stand der Technik besteht darin, dass die mit dem schwenkbaren Transportbandabschnitt gekoppelte Kolben-Zylindereinheit an der Unterseite dieses Transportbandabschnittes angebracht ist, wodurch eine große Gefahr der Beschädigung der Kolben-Zylindereinheit besteht, da diese ungeschützt unterhalb des Transportbandes verläuft.

Nach weiterem Stand der Technik (EP 1 864 921 A) ist es bekannt, den schwenkbaren Transportbandabschnitt nach oben umzuklappen, was vordergründig den Vorteil besitzt, in den Endlagen ohne eine Arretierung auszukommen, da die Vorrichtung dort bauartbedingt auf Block geht.

Hier besteht allerdings der Nachteil, dass auf dem ersten Transportbandabschnitt keine Aufbauten, wie z. B. eine Absauganlage vorgesehen werden dürfen. Des weiteren muss beim Verschwenken des Transportbandes in die Transportstellung das Förderband entspannt werden, weil der Drehpunkt dann zu weit von dem endlos umlaufenden Transportband entfernt ist.

Bei dem aus der dem Dokument DE 2228395 A bekannten bordeigenen Be- und Entladungsgerät für Flugzeuge sind zwei Förderbänder gelenkig miteinander verbunden. Insofern liegt kein einheitliches knickbares Förderband vor, sondern zwei relativ zueinander verschwenkbare Förderbänder.

Ein derartiges zweigeteiltes Förderband ist für Baumaschinen, die loses Fördergut befördern, ungeeignet, da das Fördergut zwischen den beiden Förderbändern hindurch fallen würde und sogar die Förderbänder blockieren würde. Bei einer Beladung eines Flugzeuges mit Frachtgut kann dies nicht geschehen, da sich das Frachtgut über eine größere Länge erstreckt und den Spalt zwischen beiden Förderbändern überbrücken kann.

Entsprechendes gilt auch im Hinblick auf eine Schiffsbe- und entladeeinrichtung gemäß DD-A-203885.

Auch aus diesem Stand der Technik ist kein Kurvengetriebe bekannt, bei dem bei einem knickbaren Transportband ein Transportbandabschnitt mit Hilfe einer Steuerkurve um ca. 180° verschwenkt werden kann.

Der Erfindung liegt die Aufgabe zugrunde, ein knickbares Transportband, eine selbstfahrende Baumaschine, sowie ein Verfahren zum Verschwenken eines Transportbandabschnitts zu schaffen, das in seiner Konstruktion vereinfacht ist und kein zusätzliches Arretiermittel für das Transportband benötigt.

Zur Lösung dieser Aufgabe dienen die Merkmale der Ansprüche: 1 und 14.

Die Erfindung sieht in vorteilhafter Weise vor, dass das Schwenkgetriebe aus einem Kurvengetriebe besteht. Das Vorsehen eines Kurvengetriebes ermöglicht es, dass das Schwenkgetriebe mit einer einzigen Antriebseinrichtung den vollständigen Schwenkvorgang von ca. 180° ausführen kann.

Desweiteren ermöglicht das Kurvengetriebe in den Endpositionen durch einen entsprechenden Kurvenverlauf, Rastpositionen vorzusehen, so dass der schwenkbare Transportbandabschnitt in den Endpositionen selbsthemmend gehalten werden kann, ohne dass zusätzliche Arretiermittel notwendig sind.

Vorzugsweise ist vorgesehen, dass das Kurvengetriebe eine Steuerkurve aufweist, die mit einem Koppelelement zusammenwirkt, wobei die Steuerkurve an einem der Transportbandabschnitte angeordnet ist und das Koppelelement an dem anderen Transportbandabschnitt gelagert ist.

Dabei kann die Steuerkurve ortsfest an einem der Transportbandabschnitte angeordnet sein und das Koppelelement an dem anderen Transportbandabschnitt schwenkbar gelagert sein.

Vorzugsweise ist die Steuerkurve ortsfest an dem zweiten Transportbandabschnitt angeordnet und das Koppelelement an dem ersten Transportbandabschnitt schwenkbar entlang einer Bahnkurve gelagert. Dabei kann ist die Bahnkurve rund sein, vorzugsweise eine Kreisbahn.

Bei einer bevorzugten Ausführungsform ist vorgesehen, dass das Schwenkgetriebe eine Stelleinrichtung und einen von der Stelleinrichtung betätigten Schwenkhebel aufweist.

Der Schwenkhebel weist einen ersten Hebelarm und einen unter einem Winkel von dem ersten Hebelarm abstehenden zweiten Hebelarm auf, wobei der Schwenkhebel bei Betätigung der Stelleinrichtung den zweiten Transportbandabschnitt über das Kurvengetriebe verschwenkt.

Dabei ist dort von besonderem Vorteil, dass die Antriebseinrichtung an dem an der Baumaschine angelenkten Transportbandabschnitt angebracht werden kann, während das Kurvengetriebe an dem schwenkbaren Transportabschnitt fest angeordnet ist. Dadurch ist es nicht erforderlich, Versorgungsleitungen für die Antriebseinrichtung in den schwenkbaren Transportbandabschnitt zu übertragen.

Vorzugsweise ist vorgesehen, dass der Schwenkhebel bei Betätigung der Stelleinrichtung zum Steuern der Schwenkbewegung des zweiten Transportbandabschnittes auf die Steuerkurve des Kurvengetriebes einwirkt. Bei Betätigung der Stelleinrichtung kann der Schwenkhebel die Schwenkbewegung des schwenkbaren Transportbandabschnittes vollständig über den insgesamt vorgesehenen Schwenkwinkel von ca. 180° ausführen.

Bei einer bevorzugten Ausführungsform ist vorgesehen, dass die Steuerkurve in eine Steuerplatte eingearbeitet ist. Das Koppelelement ist am freien Ende des Schwenkhebels angeordnet. Der Schwenkhebel kann mit dem freien Ende des ersten Hebelarms an dem freien Ende des ersten Transportbandabschnittes gelagert sein, wobei die Stelleinrichtung gelenkig an der Gabelstelle zwischen dem ersten und dem zweiten Hebelarm angreift. Der zweite Hebelarm weist an seinem freien Ende das Koppelelement auf, das im Eingriff mit der Steuerkurve des Kurvengetriebes ist.

Die Steuerkurve weist unterschiedliche Kurvenabschnitte auf, wobei in den Endpositionen des schwenkbaren zweiten Transportbandabschnittes die Steuerkurve Rastpositionen aufweist, in denen der zweite Transportbandabschnitt selbsthemmend gehalten ist.

Vorzugsweise ist vorgesehen, dass die Steuerkurve einen ersten Kurvenabschnitt zum selbsthemmenden Halten des zweiten Transportbandabschnittes in Arbeitstellung, einen sich an den ersten Kurvenabschnitt anschließenden zweiten Kurvenabschnitt zum Absenken des zweiten Transportbandabschnittes, einen sich an den zweiten Kurvenabschnitt anschließenden dritten Kurvenabschnitt zum Überführen des zweiten Transportbandabschnittes in die Transportstellung, und einen sich an den dritten Kurvenabschnitt anschließenden vierten Kurvenabschnitt zum selbsthemmenden Halten des zweiten Transportbandabschnittes in Transportstellung aufweist.

Dabei ist vorgesehen, dass die Kurvenabschnitte der Steuerkurve in der Arbeitsstellung und Transportstellung des zweiten Transportbandabschnittes jeweils eine Ausrichtung aufweisen, die in Verbindung mit dem Koppelelement des Schwenkhebels eine Rastposition ohne Verriegelungsmittel bildet, die nur bei Betätigung der Stelleinrichtung wieder verlassen werden kann.

Vorzugsweise ist vorgesehen, dass die Steuerkurve derart ausgebildet ist, dass die Kräfte in der Kolben-Zylindereinheit über den gesamten Schwenkbereich minimiert sind. Dies kann bewerkstelligt werden, indem die Hebelarme des Schwenkhebels unter einem Winkel von weniger als 90 ° voneinander abstehen und/oder der mit dem zweiten Transportbandabschnitt gekoppelte Hebelarm länger als der mit dem ersten Transportbandabschnitt gekoppelte Hebelarm ist, und vorzugsweise mehr als doppelt so lang ist.

Die der Stelleinrichtung abgewandten Enden des ersten und zweiten Hebelarms können miteinander verbunden sein, wobei der Schwenkhebel aus einer Platte oder aus vorzugsweise dreieckförmig miteinander verbundenen Lenkern bestehen kann.

Vorzugsweise sind zwei paarweise angeordnete und synchron betriebene Schwenkgetriebe seitlich neben den Transportbandabschnitten angeordnet. In einer bevorzugten Ausführungsform können einander entsprechende Teile des Schwenkgetriebes mittels Überbrückungselemente miteinander verbunden sein, um den Synchronlauf zu verbessern und/oder eine Versteifung herbeizuführen. Hierzu können Querstreben die paarweise nebeneinander angeordneten Teilpaare der beiderseitigen Schwenkgetriebe miteinander verbinden. Außerdem können die das Koppelelement bildenden Stützrollen eine gemeinsame Achse aufweisen, und somit ebenfalls die Struktur des Kurvengetriebes verstärken.

Das Verfahren zum Verschwenken eines an einem ersten Transportbandabschnitt angelenkten zweiten Transportbandabschnitts, ist gekennzeichnet durch Ausüben einer Stellkraft auf ein mit einem Transportbandabschnitt gekoppeltes Koppelelement oder auf ein mit dem anderen Transportbandabschnitt gekoppelten Steuerkurvenelement, wobei das Koppelelement mit dem Steuerkurvenelement im Eingriff ist, um die Schwenkbewegung des zweiten Transportbandabschnittes zu erzeugen.

Dabei kann das Steuerkurvenelement oder das Koppelelement ortsfest an einem der Transportbandabschnitte befestigt werden, und das komplementäre Element an dem anderen Transportbandabschnitt schwenkbar gelagert werden.

Vorzugsweise wird das schwenkbar gelagerte Element auf einer Kreisbahn bewegt.

Im folgenden werden unter Bezugnahme auf die Zeichnungen ein Ausführungsbeispiel der Erfindung näher erläutert.

Es zeigen:
- Fig. 1: eine Straßenbaumaschine mit einem Transportband,
- Fig. 2: eine Seitenansicht eines knickbaren Transportbandes in der Seitenansicht in Arbeitsstellung,
- Fig. 3: eine schematische Draufsicht auf das Transportband ohne Fördergurt,
- Fig. 4: das Transportband mit einem um ca. 70° verschwenkten vorderen Transportbandabschnitt,
- Fig. 5: das knickbare Transportband in der Transportstellung,
- Fig. 6: die Steuerplatte des Kurvengetriebes, und
- Fig. 7: eine vergrößerte Draufsicht auf das Kurvengetriebe des Transportbandes.

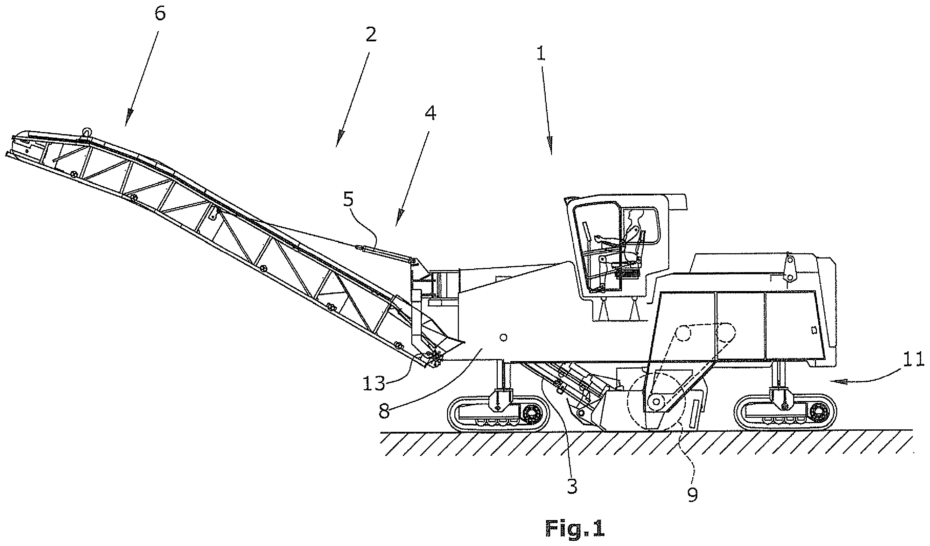

Fig. 1 zeigt eine Straßenfräsmaschine zum Fräsen von Boden- oder Verkehrsflächen in der Ausführungsform einer Frontladerstraßenfräse. Die Straßenfräsmaschine 1 weist ein Fahrwerk 11 auf mit beispielsweise vier Kettenlaufwerken, das den Maschinenrahmen 8 der Straßenfräsmaschine 1 trägt. Es versteht sich, dass die Kettenlaufwerke durch Räderlaufwerke ganz oder teilweise substituiert werden können. In dem Maschinenrahmen 8 ist eine Fräswalze 9 gelagert, die sich quer zur Fahrtrichtung erstreckt. Die Einstellung der Frästiefe erfolgt vorzugsweise mit Hilfe der Höhenverstellung der Kettenlaufwerke über Hubsäulen. Die in Fig. 1 dargestellte Straßenfräsmaschine 1 wird auch als Frontlader-Straßenfräse bezeichnet, da sie das abgefräste Material in Fahrtrichtung nach vorne auf ein Transportfahrzeug befördern kann. In Fahrtrichtung vor der Fräswalze 9 ist eine erste, aus einem Transportband 3 bestehende Transporteinrichtung angeordnet, die das abgefräste Material vorzugsweise zu einer zweiten, aus einem knickbaren Transportband 2 bestehende Transporteinrichtung überträgt. Es versteht sich, dass die Straßenfräsmaschine 1 auch nur ein einziges Transportband 2 aufweisen kann, das auch am Heck der Maschinen angeordnet sein kann.

Die in Fig. 1 gezeigte Straßenfräsmaschine zeigt ein typisches Ausführungsbeispiel einer Baumaschine, bei dem ein knickbares Transportband einsetzbar ist.

Das knickbare Transportband 2 ist grundsätzlich auch für andere Baumaschinen verwendbar, bei denen ein Materialtransport stattfindet, und bei denen ein Interesse besteht, die Baulänge der Maschine zu Transportzwecken zu reduzieren.

Die in Fig. 1 gezeigte Straßenfräsmaschine 1 ist eine Kaltfräsmaschine, mit der in der Hauptsache Straßenoberflächen gefräst werden können. Das von einer Fräswalze 9 abgearbeitete Material wird über ein in der Maschine vorhandenes erstes Transportband 3 von einem die Fräswalze 9 umgebenden Walzenkasten bis zu dem vorderen Ende des Maschinenrahmens 8 der Maschine transportiert und dort an ein zweites Transportband 2 übergeben, das zu Transportzwecken abgeknickt werden kann, um die Länge der Maschine 1 zu verkürzen.

Dieses knickbare Transportband 2 weist einen ersten schwenkbar an dem Maschinenrahmen 8 der Baumaschine 1 angelenkten Transportbandabschnitt 4 und einen an dem ersten Transportbandabschnitt 4 schwenkbar angelenkten zweiten Transportbandabschnitt 6 auf. Ein endlos umlaufender Fördergurt 10 wird über beide Transportbandabschnitte 4,6 geführt. Das schwenkbare Transportband 2 ist sowohl um eine bodenparallele Achse 13 um die Höheneinstellung des Transportbandes 2 zu verändern, als auch um auf eine vertikale Achse schwenkbar, um den Materialtransport zu einem seitlich neben der Frässpur stehenden Lastkraftwagen zu ermöglichen. Der schwenkbare zweite Transportabschnitt 6 ist nur um eine bodenparallele Achse um ein Gelenk 26 schwenkbar. Zur Höhenverstellung kann beispielsweise ein Zugeinrichtung 5 verwendet werden, die einerseits an dem Maschinenrahmen 8 angelenkt ist und andererseits an dem ersten Transportbandabschnitt 4 befestigt ist.

Zwischen den Transportbandabschnitten 4,6 ist ein Schwenkgetriebe angeordnet, das aus einem Kurvengetriebe 12 besteht.

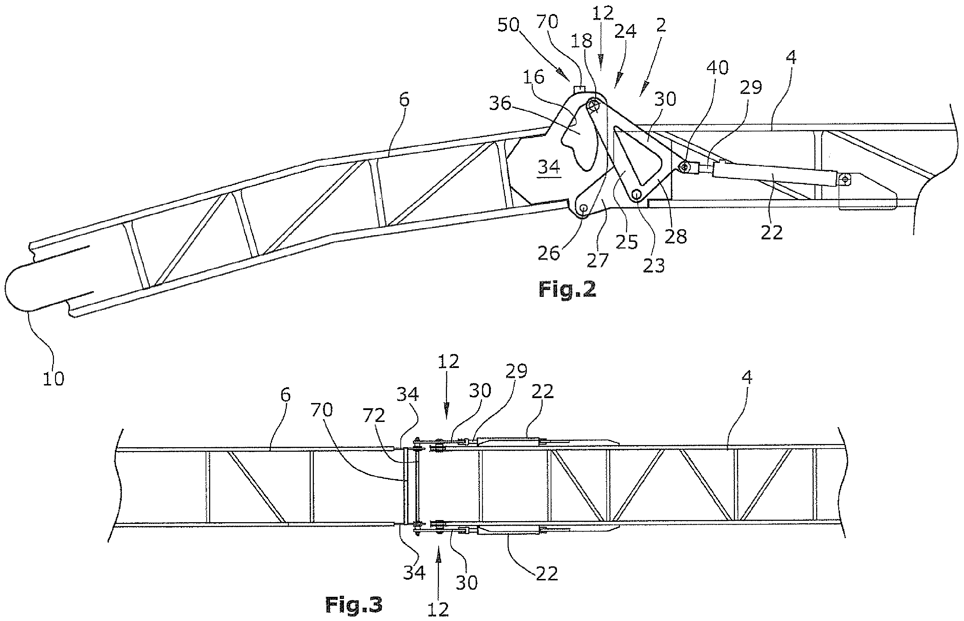

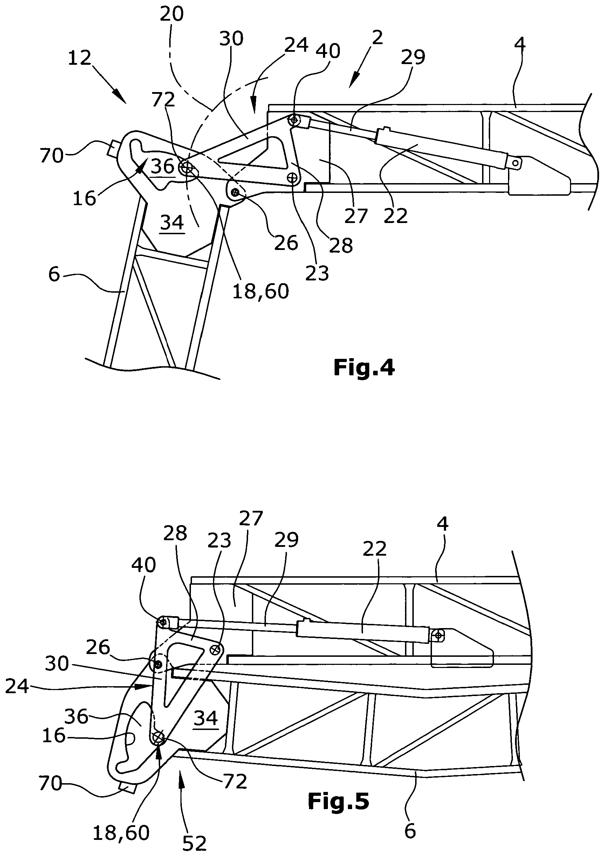

Fig. 2 zeigt das Transportband 2 in der Arbeitsstellung. Der an der Baumaschine 1 angelenkte Transportbandabschnitt 4 ist über ein Schwenkgelenk 26 mit bodenparalleler Achse, das in einer Seitenplatte 27 des Transportbandabschnittes 4 gelagert ist, mit dem zweiten Transportbandabschnitt 6 gelenkig verbunden, so dass der zweite Transportbandabschnitt 6 um dieses Gelenk 26 aus der Arbeitsstellung in die Transportstellung, wie in Fig. 4 gezeigt ist, schwenkbar ist.

Das knickbare Transportband 2 weist ein Schwenkgetriebe in Form eines Kurvengetriebes 12 auf, das zwischen dem ersten und zweiten Transportbandabschnitt 4,6 wirkt und die Schwenkbewegung um das Gelenk 26 steuert. Hierzu ist vorzugsweise an dem ersten Transportbandabschnitt 4 eine vorzugsweise aus einer Kolben-Zylindereinheit bestehende Stelleinrichtung 22 angeordnet, deren Kolbenstange 29 mit einem Schwenkhebel 24 gelenkig an einem Gelenk 40 des Schwenkhebels 24 gekoppelt ist.

Der Schwenkhebel 24 weist zumindest einen ersten Hebelarm 28, sowie einen zweiten Hebelarm 30 auf, die unter einem festen Winkel in der Art eines zweiarmigen Hebels voneinander abstehen und zwar vorzugsweise unter einem Winkel von etwas weniger als 90°.

Der erste Hebelarm 28 ist an dem ersten Transportbandabschnitt 4 in der Nähe seines freien Endes in einem Gelenk 23 in der Seitenplatte 27 mit bodenparalleler Achse gelagert, wobei das andere Ende des ersten Hebelarms 28 gelenkig mit der Kolbenstange 29 der Kolben-Zylindereinheit 22 verbunden ist.

Der zweite Hebelarm 30 ist einerseits ebenfalls an der Kolbenstange 29 der Kolben-Zylindereinheit 22 angelenkt und weist an seinem anderen Ende ein Koppelelement 18 auf, das im Eingriff ist mit einer Steuerkurve 16 des Kurvengetriebes 12. Bei Bewegung des Koppelelementes 18 wird der Transportbandabschnitt 6 mit Hilfe der Steuerkurve 16 verschwenkt, wobei die Steuerkurve 16 stets an dem Koppelelement 18 anliegt.

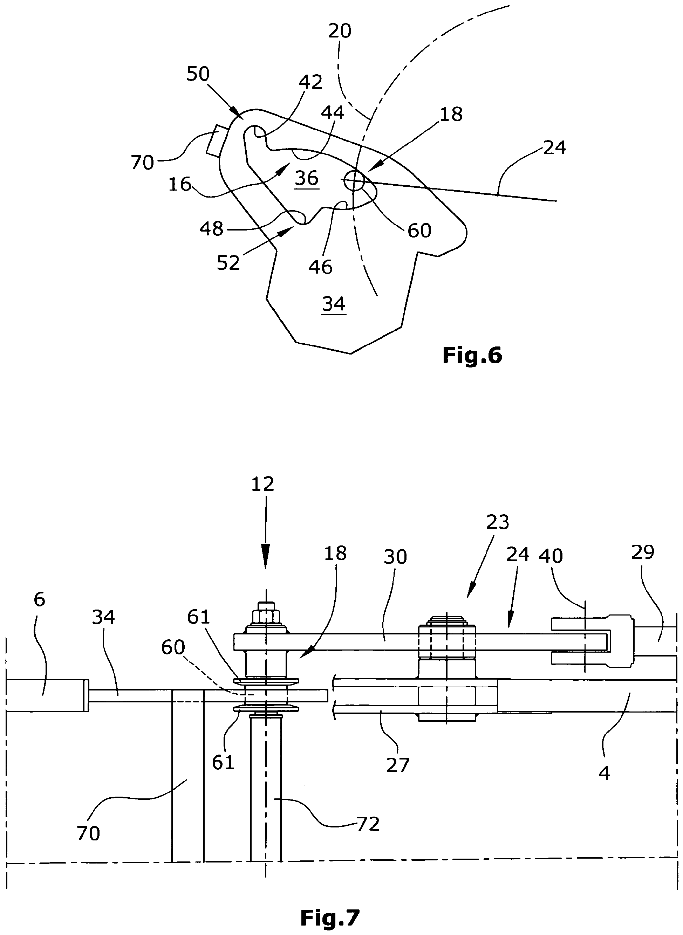

Zur Versteifung des Schwenkhebels 24 kann dieser aus einer Platte, oder aus dreieckförmig angeordneten Streben, wie aus Fig. 2 ersichtlich, bestehen. In der Spitze des aus den Streben gebildeten spitzwinkligen Dreiecks ist das Koppelelement 18 angeordnet, das aus der drehbar gelagerten Stützrolle 60 besteht. Die Stützrolle 60 wird über die Kolben-Zylindereinheit 22 und den Schwenkhebel 24 bewegt und drückt auf die Steuerkurve 16 des Kurvengetriebes 12, wodurch eine Kraft auf den schwenkbar angelenkten zweiten Transportbandabschnitt 6 ausgeübt wird. Bei Vorwärtsbewegung der Kolbenstange 29 der Kolben-Zylindereinheit 22 verlässt die Stützrolle 60 die in Fig. 6 ersichtlichen Rastposition 50 in einem ersten Kurvenabschnitt 42 der Steuerkurve 16 und bewegt sich entlang eines zweiten Kurvenabschnittes 44, wodurch der zweite Transportbandabschnitt 6 abgesenkt wird. Im Bereich des dritten Kurvenabschnitts 46 der Steuerkurve 16 wird der zweite Transportbandabschnitt 6 unter den ersten Transportbandabschnitt 4 gedrückt, wobei sich die Stützrolle 60 in der in Fig. 5 gezeigten Transportstellung auf der Steuerkurve 16 in der zweiten Rastposition 52 im vierten Kurvenabschnitt 48 befindet.

In den jeweiligen Rastpositionen 50 und 52 wird der zweite Transportbandabschnitt 6 selbsthemmend gehalten, so dass keine zusätzlichen Arretiermittel benötigt werden, um den schwenkbaren Transportbandabschnitt 6 in seinen Endpositionen zu halten. Selbst wenn die Kolben-Zylindereinheit (22) drucklos gemacht oder gar demontiert wird, verharrt das Transportband in der jeweiligen Rastposition.

Mit Hilfe des Kurvengetriebes 12 kann demzufolge der schwenkbare Transportbandabschnitt 6 eine Schwenkbewegung von ca. 180° ausführen.

Die Stützrolle 60 bewegt sich dabei auf einer in Fig. 6 gezeigten kreisförmigen Bahnkurve 20 um das Gelenk 23. Der erste Hebelarm 28 ist vorzugsweise kürzer als der zweite Hebelarm 30, wobei letzterer die zwei- bis dreifache Länge des ersten Hebelarms 28 aufweisen kann.

Das Kurvengetriebe 12 weist eine Steuerplatte 34 auf, in der die Steuerkurve 16 in Form einer Aussparung 36 ausgebildet ist. Die Steuerplatte 34 ist fest mit dem zweiten Transportbandabschnitt 6 verbunden, nämlich vorzugsweise mit den Streben des zweiten Transportbandabschnittes 6 verschweißt.

Wie am besten aus Fig. 3 und 7 ersichtlich, sind vorzugsweise zwei synchron von zwei Stelleinrichtungen 22 betätigte Kurvengetriebe 12 beiderseits der Transportbandabschnitte 4,6 angeordnet. Dabei stellt mindestens eine Querstrebe 70 eine Überbrückung zwischen den Steuerplatten 34 der linken und rechten Seite dar, die eine Versteifung der Steuerplatten 34 herbeiführt. Eine vergleichbare Überbrückung zwischen den Koppelelementen 18 der linken und rechten Seite ist durch eine Achse 72 verwirklicht, die für einen verbesserten Gleichlauf der beiden Seiten der Schwenkgetriebe sorgt. Die Achse 72 ist eine gemeinsame Achse für die Stützrollen 60 auf beiden Seiten und versteift gleichzeitig die beiderseitige Schwenkhebelanordnung. Die Stützrollen laufen innerhalb der Aussparung 36 und haben beiderseits konische Seitenscheiben 61, die ein Abrutschen der Stützrollen 60 von den Steuerkurven verhindern.

Es können auch mehrere Querstreben 70 zwischen den Steuerplatten 34 vorgesehen sein und auch die Gelenke 23,26 können auf einer gemeinsamen Achse von beiderseits des Transportbandes 2 angeordneten Kurvengetrieben 12 angeordnet sein.

Es versteht sich, dass die gezeigte Getriebeanordnung des Kurvengetriebes 12 auch in kinematischer Umkehrung verwirklicht sein kann. Wesentlich ist allerdings, dass für die Betätigung des Kurvengetriebes 12 nur eine einzige Kolben-Zylindereinheit 22 benötigt wird, und dass keine zusätzlichen Arretiervorrichtungen für die beiden Endpositionen des schwenkbaren Transportbandabschnittes 6 erforderlich sind.

## Patentansprüche

1. Selbstfahrende Baumaschine, insbesondere Straßenfräsmaschine, mit
einem Maschinenrahmen (8),
einer an dem Maschinenrahmen (8) gelagerten Fräswalze (9),
einem den Maschinenrahmen (8) tragenden Fahrwerk (11),
einem knickbaren Transportband (2) mit einem an dem Maschinenrahmen (8) angelenkten ersten Transportbandabschnitt (4) und einem an dem ersten Transportbandabschnitt (4) schwenkbar angelenkten zweiten Transportbandabschnitt (6),
einem über beide Transportbandabschnitte (4,6) endlos umlaufenden Fördergurt (10), und
mindestens einem zwischen den Transportbandabschnitten (4,6) wirkenden Schwenkgetriebe,
**dadurch gekennzeichnet,dass**
das Schwenkgetriebe ein Kurvengetriebe (12) umfasst.

2. Selbstfahrende Baumaschine nach Anspruch 1, **dadurch gekennzeichnet, dass** die Steuerkurve (16) mit einem Koppelelement (18) zusammenwirkt, wobei die Steuerkurve (16) an einem der Transportbandabschnitte (4;6) angeordnet ist und das Koppelelement (18) an dem anderen Transportbandabschnitt (6;4) gelagert ist.

3. Selbstfahrende Baumaschine nach Anspruch 1 oder 2, **dadurch gekennzeichnet, dass** die Steuerkurve (16) ortsfest an einem der Transportbandabschnitte (4;6) angeordnet ist und das Koppelelement (18) an dem anderen Transportbandabschnitt (6;4) schwenkbar gelagert ist.

4. Selbstfahrende Baumaschine nach einem der Ansprüche 1 bis 3, **dadurch gekennzeichnet, dass** die Steuerkurve (16) ortsfest an dem zweiten Transportbandabschnitt (6) angeordnet ist und das Koppelelement (18) an dem ersten Transportbandabschnitt (4) entlang einer Bahnkurve (20) schwenkbar gelagert ist.

5. Selbstfahrende Baumaschine nach einem der Ansprüche 1 bis 4, **dadurch gekennzeichnet, dass** das Schwenkgetriebe eine Stelleinrichtung (22) und einen von der Stelleinrichtung (22) betätigten Schwenkhebel (24) aufweist, wobei der Schwenkhebel (24) einen ersten Hebelarm (28) und einen unter einem Winkel von dem ersten Hebelarm (28) abstehenden zweiten Hebelarm (30) aufweist, wobei der Schwenkhebel (24) bei Betätigung der Stelleinrichtung (22) den zweiten Transportbandabschnitt (6) über das Kurvengetriebe (12) verschwenkt.

6. Selbstfahrende Baumaschine nach Anspruch 5, **dadurch gekennzeichnet, dass** der Schwenkhebel (24) bei Betätigung der Stelleinrichtung (22) zum Steuern der Schwenkbewegung des zweiten Transportbandabschnittes (6) auf die Steuerkurve (16) des Kurvengetriebes (12) einwirkt.

7. Selbstfahrende Baumaschine nach einem der Ansprüche 2 bis 6, **dadurch gekennzeichnet, dass** die Steuerkurve (16) als Aussparung (36) in einer Steuerplatte (34) angeordnet ist und dass das Koppelelement (18) in der Aussparung (36) über die Steuerkurve (16) die Schwenkbewegung des zweiten Transportbandabschnittes (6) steuert.

8. Selbstfahrende Baumaschine nach einem der Ansprüche 5 bis 7, **dadurch gekennzeichnet, dass** der Schwenkhebel (24) mit dem freien Ende des ersten Hebelarms (28) an dem freien Ende des ersten Transportbandabschnittes (4) gelagert ist und dass die Stelleinrichtung (22) an der Gabelstelle zwischen dem ersten und dem zweiten Hebelarm (28,30) gelenkig angreift.

9. Selbstfahrende Baumaschine nach einem der Ansprüche 2 bis 8, **dadurch gekennzeichnet, dass** die Steuerkurve (16) unterschiedliche Kurvenabschnitte (42,44,46,48) aufweist und an den Enden der Steuerkurve (16) die Rastpositionen (50,52) ausgebildet sind, in denen der zweite Transportbandabschnitt (6) jeweils selbsthemmend gehalten ist.

10. Selbstfahrende Baumaschine nach Anspruch 9, **dadurch gekennzeichnet, dass** die Steuerkurve einen ersten Kurvenabschnitt (42) zum selbsthemmenden Halten des zweiten Transportbandabschnittes (6) in Arbeitstellung, einen sich an den ersten Kurvenabschnitt (42) anschließenden zweiten Kurvenabschnitt (44) zum Absenken des zweiten Transportbandabschnittes (6), einen sich an den zweiten Kurvenabschnitt (44) anschließenden dritten Kurvenabschnitt (46) zum Überführen des zweiten Transportbandabschnittes (6) in die Transportstellung, und einen sich an den dritten Kurvenabschnitt (46) anschließenden vierten Kurvenabschnitt (48) zum selbsthemmenden Halten des zweiten Transportbandabschnittes (6) in Transportstellung aufweist.

11. Selbstfahrende Baumaschine nach Anspruch 9 oder 10, **dadurch gekennzeichnet, dass** die Kurvenabschnitte (42,48) an den Enden des von dem Koppelelement (18) abgetasteten Bereichs der Steuerkurve (16) jeweils eine Richtung aufweisen, die in Verbindung mit dem Koppelelement (18) des Schwenkhebels (24) eine Rastposition (50,52) ohne Verriegelungsmittel für die Arbeitsstellung und die Transportstellung des zweiten Transportbandabschnittes (6) bildet, die nur bei Betätigung der Stelleinrichtung (22) wieder verlassen werden kann.

12. Selbstfahrende Baumaschine nach einem der Ansprüche 1 bis 11, **dadurch gekennzeichnet, dass** zwei Kurvengetriebe (12) paarweise seitlich neben den Transportbandabschnitten (4,6) angeordnet sind.

13. Selbstfahrende Baumaschine nach einem der Ansprüche 1 bis 12, **dadurch gekennzeichnet, dass** das Schwenkgetriebe ein Kurvengetriebe (12) umfasst, das eine Steuerkurve (16) aufweist, wobei das Kurvengetriebe (12) in den Endpositionen der Steuerkurve (16) durch einen entsprechenden Kurvenverlauf Rastpositionen (50,52) bildet, in denen der schwenkbare Transportabschnitt (6) jeweils selbsthemmend gehalten ist, ohne dass zusätzliche Arretiermittel notwendig sind.

14. Verfahren zum Verschwenken eines an einem ersten Transportbandabschnitt (4) angelenkten zweiten Transportbandabschnitts (6) am Ende eines dieser Transportbandabschnitte (4,6) aufweisenden knickbaren Transportbandes (2) einer selbstfahrenden Baumaschine nach dem Oberbegriff des Anspruchs 1 mit einem über beide Transportbandabschnitte (4,6) endlos umlaufenden Fördergurt (10),
**gekennzeichnet durch**
Ausüben einer Stellkraft auf ein mit dem ersten einem Transportbandabschnitt (4) gekoppeltes Koppelelement (18) eines Kurvengetriebes (12) oder auf ein mit dem anderen Transportbandabschnitt (6) gekoppelten Steuerkurvenelement (16) des Kurvengetriebes (12), wobei das Koppelelement (18) mit dem Steuerkurvenelement (16) im Eingriff ist, um die Schwenkbewegung des zweiten Transportbandabschnittes (6) zu erzeugen.

15. Verfahren nach Anspruch 14, **dadurch gekennzeichnet, dass** das Steuerkurvenelement (16) oder das Koppelelement (18) ortsfest an einem der Transportbandabschnitte (4,6) befestigt wird, und dass das zu dem Steuerkurvenelement (16) oder dem Koppelelement (18) komplementäre Element an dem anderen Transportbandabschnitt (6,4) schwenkbar gelagert wird.

## Claims

1. Automotive construction machine, in particular road milling machine, with
a machine frame (8),
a milling drum (9) supported at the machine frame (8),
a chassis (11) carrying the machine frame (8),
a folding transport conveyor (2) with a first transport conveyor section (4) articulated at the construction machine (1) and a second transport conveyor section (6) articulated at the first transport conveyor section (4) in a pivoting fashion,
a conveyor belt (10) continuously revolving around both transport conveyor sections (4; 6), and
at least one pivoting mechanism acting between the transport conveyor sections (4; 6),
**characterized in that**
the pivoting mechanism consists of a cam mechanism (12).

2. Automotive construction machine in accordance with claim 1, **characterized in that** a control cam (16) interacts with a coupling element (18), wherein the control cam (16) is arranged at one of the transport conveyor sections (4; 6), and the coupling element (18) is mounted at the other transport conveyor section (6; 4).

3. Automotive construction machine in accordance with claim 1 or 2, **characterized in that** the control cam (16) is arranged at one of the transport conveyor sections (4; 6) in a permanent fashion, and the coupling element (18) is mounted at the other transport conveyor section (6;4) in a pivoting fashion.

4. Automotive construction machine in accordance with one of the claims 1 to 3, **characterized in that** the control cam (16) is arranged at the second transport conveyor section (6) in a permanent fashion, and the coupling element (18) is mounted at the first transport conveyor section (4) in a pivoting fashion along a trajectory (20).

5. Automotive construction machine in accordance with one of claims 1 to 4, **characterized in that** the pivoting mechanism comprises an actuating device (22) and a pivoting lever (24) actuated by the actuating device (22), wherein the pivoting lever (24) comprises a first lever arm (28) and a second lever arm (30) projecting from the first lever arm (28) at an angle, wherein the pivoting lever (24) pivots the second transport conveyor section (6) via the cam mechanism (12) upon actuation of the actuating device (22).

6. Automotive construction machine in accordance with claim 5, **characterized in that** the pivoting lever (24), upon actuation of the actuating device (22), acts on the control cam (16) of the cam mechanism (12) for controlling the pivoting movement of the second transport conveyor section (6).

7. Automotive construction machine in accordance with one of the claims 2 to 6, **characterized in that** the control cam (16) is arranged as a cut-out (36) in a control plate (34), and that the coupling element (18) controls the pivoting movement of the second transport conveyor section (6) in the cut-out (36) via the control cam (16).

8. Automotive construction machine in accordance with one of the claims 5 to 7, **characterized in that** the pivoting lever (24) is mounted, with the free end of the first lever arm (28), at the free end of the first transport conveyor section (4), and that the actuating device (22) engages in an articulated fashion with the bifurcation point between the first and the second lever arm (28, 30).

9. Automotive construction machine in accordance with one of the claims 2 to 8, **characterized in that** the control cam (16) comprises different cam sections (42, 44, 46, 48), and that detent positions (50, 52) are designed at the ends of the control cam (16) in each of which the second transport conveyor section (6) is retained in a self-locking fashion.

10. Automotive construction machine in accordance with claim 9, **characterized in that** the control cam comprises a first cam section (42) for retaining, in a self-locking fashion, the second transport conveyor section (6) in the working position, a second cam section (44) following the first cam section (42) for lowering the second transport conveyor section (6), a third cam section (46) following the second cam section (44) for moving the second transport conveyor section (6) into the transport position, and a fourth cam section (48) following the third cam section (46) for retaining, in a self-locking fashion, the second transport conveyor section (6) in the transport position.

11. Automotive construction machine in accordance with claim 9 or 10, **characterized in that** the cam sections (42, 48) at the ends of the area of the control cam (16) sensed by the coupling element (18) comprise one alignment each which, in connection with the coupling element (18) of the pivoting lever (24), forms a detent position (50, 52) without locking means for the working position and the transport position of the second transport conveyor section (6) which can only be left again upon actuation of the actuating device (22).

12. Automotive construction machine in accordance with one of the claims 1 to 11, **characterized in that** two cam mechanisms (12) are arranged in pairs at the sides next to the transport conveyor sections (4; 6).

13. Automotive construction machine in accordance with one of the claims 1 to 12, **characterized in that** the pivoting mechanism comprises a cam mechanism (12) with a control cam (16), wherein, in the end positions of the control cam (16), the cam mechanism (12) forms detent positions (50, 52) due to a corresponding cam shape, at each of which the pivotable transport section (6) is held in a self-locking fashion without requiring additional locking means.

14. Method for pivoting a second transport conveyor section (6) articulated at a first transport conveyor section (4) at the end of a folding transport conveyor (2) with a conveyor belt (10) of an automotive construction machine in accordance with the pre-characterizing part of claim 1, said belt continuously revolving around both transport conveyor sections (4, 6),
**characterized by**
exertion of an actuating force on a coupling element (18) of a cam mechanism (12) coupled to the first transport conveyor section (4), or on a control cam element (16) coupled to the other transport conveyor section (6) of the cam mechanism (12), wherein the coupling element (18) is engaged with the control cam element (16) in order to create the pivoting movement of the second transport conveyor section (6).

15. Method in accordance with claim 14, **characterized in that** the control cam element (16) or the coupling element (18) is attached at one of the transport conveyor sections (4, 6) in a permanent fashion, and that the element complementary to the control cam element (16) or the coupling element (18) is mounted at the other transport conveyor section (6, 4) in a pivoting fashion.

## Revendications

1. Engin de chantier automoteur, en particulier fraiseuse routière, doté
d'un châssis de machine (8),
d'un tambour de fraisage (9) monté sur le châssis de machine (8),
d'un train de roulement (11) portant le châssis de machine (8),
d'une bande transporteuse repliable (2) avec une première section de bande transporteuse (4) articulée sur le châssis de machine (8) et une deuxième section de bande transporteuse (6) articulée de manière pivotante sur la première section de bande transporteuse (4),
d'une matière transportée (10) circulant sans fin par le biais des deux sections de bande transporteuse (4, 6), et
d'au moins un entraînement pivotant opérant entre les sections de bande transporteuse (4, 6),
**caractérisé en ce que** l'entraînement pivotant comprend un entraînement à came (12).

2. Engin de chantier automoteur selon la revendication 1, **caractérisé en ce que** la came de commande (16) coopère avec un élément d'accouplement (18), dans lequel la came de commande (16) est disposée sur une des sections de bande transporteuse (4 ; 6) et l'élément d'accouplement (18) est monté sur l'autre section de bande transporteuse (6 ; 4).

3. Engin de chantier automoteur selon la revendication 1 ou 2, **caractérisé en ce que** la came de commande (16) est disposée de manière stationnaire sur une des sections de bande transporteuse (4 ; 6) et l'élément d'accouplement (18) est monté de manière pivotante sur l'autre section de bande transporteuse (6 ; 4) .

4. Engin de chantier automoteur selon l'une des revendications 1 à 3, **caractérisé en ce que** la came de commande (16) est disposée de manière stationnaire sur la deuxième section de bande transporteuse (6) et l'élément d'accouplement (18) est monté de manière pivotante sur la première section de bande transporteuse (4) le long d'une trajectoire (20).

5. Engin de chantier automoteur selon l'une des revendications 1 à 4, **caractérisé en ce que** l'entraînement pivotant comporte un dispositif de réglage (22) et un levier de pivot (24) actionné par le dispositif de réglage (22), dans lequel le levier de pivot (24) comporte un premier bras de levier (28) et un deuxième bras de levier (30) dépassant du premier bras de levier (28) selon un angle, selon lequel le levier de pivot (24) pivote la deuxième section de bande transporteuse (6) par le biais de l'entraînement à came (12) lors de l'actionnement du dispositif de réglage (22) .

6. Engin de chantier automoteur selon la revendication 5, **caractérisé en ce que** le levier de pivot (24) opère sur la came de commande (16) de l'entraînement à came (12) lors de l'actionnement du dispositif de réglage (22) afin de commander le mouvement de pivot de la deuxième section de bande transporteuse (6).

7. Engin de chantier automoteur selon l'une des revendications 2 à 6, **caractérisé en ce que** la came de commande (16) est disposée comme évidement (36) dans une plaque de commande (34) et **en ce que** l'élément d'accouplement (18) dans l'évidement (36) commande par le biais de la came de commande (16) le mouvement de pivot de la deuxième section de bande transporteuse (6).

8. Engin de chantier automoteur selon l'une des revendications 5 à 7, **caractérisé en ce que** le levier de pivot (24) est monté avec l'extrémité libre du premier bras de levier (28) sur une extrémité libre de la première section de bande transporteuse (4) et **en ce que** le dispositif de réglage (22) entre en prise de manière articulée sur la fourche entre le premier et le deuxième bras de levier (28, 30).

9. Engin de chantier automoteur selon l'une des revendications 2 à 8, **caractérisé en ce que** la came de commande (16) comporte différentes sections de came (42, 44, 46, 48) et les positions de crantage (50, 52) où la deuxième section de bande transporteuse (6) est respectivement maintenue de manière autobloquante sont réalisées aux extrémités de la came de commande (16).

10. Engin de chantier automoteur selon la revendication 9, **caractérisé en ce que** la came de commande comporte une première section de came (42) pour maintenir de manière autobloquante la deuxième section de bande transporteuse (6) en position de travail, une deuxième section de came (44) se rattachant à la première section de came (42) pour abaisser la deuxième section de bande transporteuse (6), une troisième section de came (46) se rattachant à la deuxième section de came (44) pour transférer la deuxième section de bande transporteuse (6) en position de transport, et une quatrième section de came (48) se rattachant à la troisième section de came (46) pour maintenir de manière autobloquante la deuxième section de bande transporteuse (6) en position de transport.

11. Engin de chantier automoteur selon la revendication 9 ou 10, **caractérisé en ce que** les sections de came (42, 48) aux extrémités de la zone de la came de commande (16) qui est balayée par l'élément d'accouplement (18) comportent respectivement une direction formant en lien avec l'élément d'accouplement (18) du levier pivotant une position de crantage (50, 52) sans moyen de verrouillage pour la position de travail et la position de transport de la deuxième section de bande transporteuse (6) et ne pouvant être quittée que par actionnement du dispositif de réglage (22).

12. Engin de chantier automoteur selon l'une des revendications 1 à 11, **caractérisé en ce que** deux entraînements à came (12) sont disposés par paire latéralement à côté des sections de bande transporteuse (4, 6).

13. Engin de chantier automoteur selon l'une des revendications 1 à 12, **caractérisé en ce que** l'entraînement pivotant comprend un entraînement à came (12), lequel comporte une came de commande (16), dans lequel l'entraînement à came (12) forme des positions de crantage (50, 52) aux positions d'extrémité de la came de commande (16) par le biais d'un tracé correspondant, où la section de transport pivotante (6) est respectivement maintenue de manière autobloquante, sans que des moyens de blocage supplémentaires ne soient nécessaires.

14. Procédé de pivotement d'une deuxième section de bande transporteuse (6) articulée sur une première section de bande transporteuse (4) à l'extrémité d'une bande transporteuse repliable (2), comportant ces sections de bande transporteuse (4, 6), d'un engin de chantier automoteur selon le terme général de la revendication 1 avec une matière transportée (10) circulant sans fin par le biais des deux sections de bande transporteuse (4, 6),
**caractérisé par**
l'exercice d'une force de réglage sur l'élément d'accouplement (18), accouplé à la première section de bande transporteuse (4), d'un entraînement à came (12) ou sur un élément de came de commande (16), accouplé à l'autre section de bande transporteuse (6), de l'entraînement à came (12), dans lequel l'élément d'accouplement (18) est en prise avec l'élément de came de commande (16) afin de produire le mouvement de pivot de la deuxième section de bande transporteuse (6).

15. Procédé selon la revendication 14, **caractérisé en ce que** l'élément de came de commande (16) ou l'élément d'accouplement (18) est fixé de manière stationnaire sur une des sections de bande transporteuse (4, 6), et **en ce que** l'élément complémentaire à l'élément de came de commande (16) ou à l'élément d'accouplement (18) est monté de manière pivotante sur l'autre section de bande transporteuse (6, 4).
